# EUROPÄISCHE PATENTSCHRIFT

(11) **EP 2 766 539 B1**
(45) Veröffentlichungstag und Bekanntmachung des Hinweises auf die Patenterteilung: **12.04.2017**
(21) Anmeldenummer: 12778677.0
(22) Anmeldetag: 09.10.2012
(51) Int. Cl.: E04F 13/02, E04F 13/04, C04B 14/12, C04B 28/00, C04B 28/10, E04B 1/76

(54) **ARMIERUNGSPUTZ EINES WÄRMEDÄMM-VERBUNDSYSTEMS**
REINFORCING PLASTER, IN PARTICULAR FOR USE IN HEAT-INSULATING COMPOSITE SYSTEMS
CRÉPI D'ARMATURE, NOTAMMENT POUR UTILISATION DANS DES SYSTÈMES COMPOSITES D'ISOLATION THERMIQUE

(30) Priorität: 12.10.2011 DE 102011084358
(43) Veröffentlichungstag der Anmeldung: 20.08.2014
(73) Patentinhaber: Veit Dennert KG Baustoffbetriebe, 96132 Schlüsselfeld (DE)
(72) Erfinder: DENTER, Dirk, 96132 Schlüsselfeld (DE); DENNERT, Veit, 96120 Bischberg (DE); DENNERT, Frank, 96138 Burgebrach (DE)
(74) Vertreter: Rau, Schneck & Hübner Patentanwälte Rechtsanwälte PartGmbB
(86) Internationale Anmeldenummer: PCT/EP2012/069925
(87) Internationale Veröffentlichungsnummer: WO 2013/053681

(56) Entgegenhaltungen:
- EP-A1- 0 591 645
- EP-A2- 0 094 662
- DE-A1- 3 601 689
- DE-U1-202004 021 414

## Beschreibung

Die Erfindung betrifft einen Armierungsputz, insbesondere zur Verwendung in Wärmedämm-Verbundsystemen mit den im Oberbegriff des Patentanspruches 1 angegebenen Merkmalen. Ferner bezieht sich die Erfindung auf ein Verfahren zum Auftragen eines solchen Armierungsputzes auf Wärmedämmplatten eines Wärmedämm-Verbundsystems.

Zum Hintergrund der Erfindung ist festzuhalten, dass aus Energie-Einsparungsgründen beim Neubau und der Sanierung von Gebäuden zunehmend sogenannte Wärmedämm-Verbundsysteme Verwendung finden, um die Wärmetransmission durch die Gebäudehülle möglichst weit zu reduzieren. Der übliche Aufbau eines solchen Wärmedämm-Verbundsystems sieht eine Wärmedämmstoffauflage auf der Gebäudewand in Form von Wärmedämmplatten vor, die aus Polystyrol, Mineralfaser- oder Mineralschaum-Material bestehen und auf die Fassadenfläche aufgeklebt werden. Diese Dämmstofflage ist dann mit einem bei der vorliegenden Erfindung in Rede stehenden Armierungsputz zu versehen, der aus einem organischen oder mineralischen Bindemittel in Form einer entsprechenden pastösen Masse und einem in das Bindemittel eingebetteten Armierungsgewebe besteht. Grundsätzlich ist es ferner bekannt, mineralische Armierungsputze mit einem Leichtzuschlagkorn zu versetzen, um Bindemittel einzusparen und gleichzeitig die Isolationseigenschaften des Wärmedämmverbundsystems nochmals zu verbessern. Das Leichtzuschlagkorn ist dabei in seiner Korngrößenverteilung fein und beträgt in seinem Durchmesser in der Regel nur Bruchteile der Soll-Putzdicke.

Der Aufbau des Armierungsputzes unterliegt länderabhängigen bauaufsichtlichen Zulassungen. So ist beispielsweise vorgesehen, dass das Armierungsgewebe im äußeren Drittel der Schichtdicke des Armierungsputzes liegen soll. Die Schichtdicke ist ferner von der jeweiligen Landeszulassung abhängig. So beträgt die Sollputzdicke beispielsweise in Deutschland 1,5 mm und in Österreich 3,0 mm.

In der Praxis auf der Baustelle lassen sich diese Anforderungen aufgrund des rein handwerklichen Auftragens des Armierungsputzes nur bei sehr exakter Arbeitsweise einhalten. Ferner ist in der fertigen Putzschicht kaum nachkontrollierbar, in welcher Tiefe das Armierungsgewebe eingebettet liegt, so dass Bauunternehmen als Leistungserbringer entsprechenden Reklamationen seitens des Auftraggebers oder der Baubehörde ausgesetzt sind.

Aus der DE 36 01 689 A1 ist eine wärmedämmende, nicht brennbare Fassadenverkleidung bekannt, bei der zwischen Mineralfaserplatten und Oberputz ein leichter Unterputz ohne zusätzliche Putzträger angeordnet ist. Dieser leichte Unterputz enthält geschäumte organische Zuschläge in Form von Polystyrol-Kugeln und eine in die Putzschicht eingebettete Armierung aus einem Glasseidengewebe. Ansatzpunkte zur Lösung der eingangs angegebenen Schwachpunkte des Standes der Technik sind dieser Druckschrift nicht entnehmbar.

Die EP 0 094 662 A2 offenbart einen Armierungsputz eines Wärmedämm-Verbundsystems, der ein Bindemittel, ein in das Bindemittel in einer definierten Tiefe bezogen auf die Soll-Putzdicke eingebettetes Armierungsgewebe und ein im Bindemittel verteiltes Leichtzuschlagkorn umfasst.

Aus der EP 0 591 645 A1 ist ein Unterputz bekannt, der aus einem aus gehärteten Reaktionsharz und einem Füllstoff besteht. Letzterer wird durch ein Monokorn möglichst enger Korngrößenverteilung gebildet, wobei die Durchschnittsgröße des Korns im Bereich von 2 bis 6 mm liegt.

Die DE 20 2004 021 414 U1 schließlich zeigt einen Oberputz für eine wärmespeicherfähige Wand, der Mikro-Hohlglaskugeln in einer Volumenmenge von 5 bis 70 Prozent aufweist.

Ausgehend von der oben geschilderten Problematik liegt der Erfindung die Aufgabe zugrunde, einen Armierungsputz und ein entsprechendes Verfahren zu dessen Auftragen auf Wärmedämmplatten eines Wärmedämm-Verbundsystems anzugeben, bei dem die Einhaltung bauaufsichtlicher Zulassungsvorschriften im Hinblick auf die Einbettungstiefe des Armierungsgewebes auf arbeitstechnisch einfache Weise einzuhalten und gleichzeitig Verbesserungen hinsichtlich der Ergiebigkeit und Wärmedämmwirkung des Armierungsputzes erzielbar sind.

Diese Aufgabe wird in produkttechnischer Hinsicht durch die Kennzeichnungsmerkmale des Patentanspruches 1 sowie in verfahrenstechnischer Hinsicht durch die im Kennzeichnungsteil des Patentanspruches 11 angegebenen Merkmale gelöst.

Kern der vorliegenden Erfindung ist die Ausbildung des Leichtzuschlagkorns als Rundkorn-Granulat mit einer deutlich größeren Durchmesser-Verteilung zwischen einem Minimalwert und einem Maximalwert, der mindestens etwa 60% bis 80% der Soll-Putzdicke entspricht. Dabei soll sich das Armierungsgewebe außen auf den Granulatkörpern des Rundkorn-Granulats abstützen.

Der besondere Effekt dieses erfindungsgemäßen Aufbaus eines Armierungsputzes liegt darin, dass die Rundkorn-Granulatkörper mit dem größten Durchmesser zum einem in Verbindung mit dem Bindemittel die Enddicke des Armierungsputzes im Wesentlichen auf das Maß der Soll-Putzdicke einstellen. Gleichzeitig dienen diese Kugeln als Rollkörper, auf denen das Reibebrett, mit dem die Putzschicht aufgebracht wird, leichtgängig rollen kann. Gleichzeitig wird beim Auflegen und Einreiben des Armierungsgewebes mit dem Reibebrett das Armierungsgewebe nur oberflächlich bis unter die Zenithe der größten Granulatkörper eingedrückt. Ein tieferes Absinken des Gewebes wird durch das Rundkorn-Granulat verhindert, da die größten Granulatkörper die vom Reibebrett aufgewandte Kraft abfangen und die kleineren und mittleren Granulatkörper als Stützkörnung ein tieferes Eindringen des Armierungsgewebes blockieren. Damit ist dessen Sollposition im äußeren Drittel der Putzschicht zuverlässig einzuhalten, so dass der erfindungsgemäße Armierungsputz bei besonders einfacher Auftragsweise zuverlässig den bauaufsichtlichen Zulassungsvorschriften entspricht.

Schließlich stützen die kleineren und mittleren Granulatkörper die größeren und größten Rundkornteile auch gegen ein schwerkraftbedingtes vertikales Absinken innerhalb der Putzschicht, so dass diese gleichmäßig über die gesamte Fläche aufgebaut ist.

Weitere Vorteile des erfindungsgemäßen Putzsystems sind der geringere Verbrauch an eigentlichem Putzbindemittel durch den Zusatz des Leichtzuschlagkorns, eine höhere Schlag-, Druck- und Haftzugfestigkeit des Putzsystems und eine einfache Verarbeitbarkeit durch den durch die Rundkorn-granulatkörper hervorgerufenen Rolleffekt. Der Armierungsputz ist dabei sowohl industriell als auch handwerklich anwendbar und kostensparend einzusetzen.

Gemäß einer bevorzugten Ausführungsform entspricht die Maschenweite des Armierungsgewebes etwa dem Doppelten bis Dreifachen des Durchmesser-Maximalwertes des Rundkorn-Granulats. Dieser Größenbereich hat sich als vorteilhaft für ein sauberes und zuverlässiges Einbetten des Armierungsgewebes in das äußere Drittel des Putzsystems herausgestellt.

Der Minimalwert der Durchmesser-Verteilung des Rundkorn-Granulats liegt vorzugsweise bei 0,5 mm bis 1,0 mm. Diese Größe hat sich als vorteilhaft dafür herausgestellt, dass die kleineren Kornanteile eine effektive Stützwirkung für die großen Granulatkörper und Füllwirkung innerhalb des Putzsystems entfalten können.

Der Durchmesser-Maximalwert des Rundkorn-Granulates sollte in Abhängigkeit der Putzdicke bemessen sein, wie beispielsweise ein Maximalwert von 1,0 mm bei einer Soll-Putzdicke von 1,5 mm oder 2,0 mm bei einer Soll-Putzdicke von 3,0 mm.

Auch zwischen der Maschenweite des Armierungsgewebes und dem Durchmesser-Maximalwert des Rundkorn-Granulats besteht eine Wechselbeziehung. Bei einem Durchmesser-Maximalwert des Rundkorn-Granulats von 1,5 mm ist eine vorteilhafte Maschenweite des Armierungsgewebes beispielsweise bei einem Wert von 4,0 mm anzusetzen, bei einem Maximaldurchmesser von 2,0 mm kann mit einer Maschenweite des Armierungsgewebes von 6,0 mm in vorteilhafter Weise gearbeitet werden.

Das Rundkorn-Granulat kann aus verschiedensten Materialien wie Stein, Kunststoff, Glas, Ton, Schiefer oder andere keramische Materialien bestehen. Als besonders bevorzugt hat sich allerdings Blähglas-Granulat herausgestellt, da es eine hohe Alkalibeständigkeit aufweist und sich in Verbindung mit einem als Glasfasergewebe ausgebildeten Armierungsgewebe durch seine hohe Materialähnlichkeit und -verträglichkeit auszeichnet.

Die Erfindung bezieht sich ferner auf ein Verfahren zum Auftragen eines Armierungsputzes auf Wärmedämmplatten eines Wärmedämm-Verbundsystems mit folgenden Verfahrensschritten:
- Auftragen einer aus Bindemittel und Rundkorn-Granulat bestehenden Putzbasis auf die Wärmedämmplatte,
- Auflegen des Armierungsgewebes auf die Putzbasis, und
- Einarbeiten des Armierungsgewebes in die Oberfläche der Putzbasis unter Funktion des Rundkorn-Granulates als Abstandshalter für das Armierungsgewebe auf seiner definierten Einbettungstiefe.

Wie bereits im Zusammenhang mit dem Armierungsputz selbst erörtert wurde, ist dieses Verfahren einfach und zuverlässig mit entsprechend exakten Ergebnissen hinsichtlich des Putzaufbaus sowohl maschinell als auch manuell durchführbar.

Dabei greifen die im Durchmesser maximalen Granulat-Körper des Rund-Granulats mit ihren Zenith-Zonen durch ein Verreiben des Armierungsgewebes in die Putzbasis in die Maschenöffnungen des Armierungsgewebes ein. Damit wird ein weiteres Eindrücken des Gewebes in die Putzbasis verhindert. Gleichzeitig halten und stützen diese Zenith-Zonen das Armierungsgewebe in seiner randseitigen Einbettung in der Putzbasis. Das gesamte Putzsystem ist also in sich geschlossen und sehr stabil.

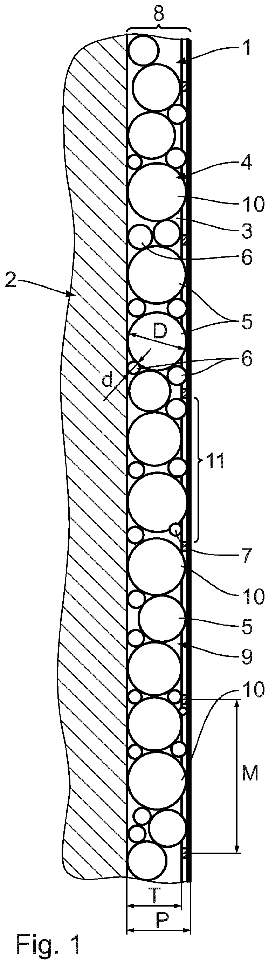

Weitere Merkmale, Einzelheiten und Vorteile der Erfindung ergeben sich aus der nachfolgenden Beschreibung eines Ausführungsbeispiels anhand der beigefügten Zeichnung. Diese
- Fig. 1: zeigt einen stark vergrößerten, ausschnittsweisen Vertikalschnitt durch ein Wärmedämm-Verbundsystem.

Aus der Zeichnung geht ein Armierungsputz 1 hervor, der als Teil eines Wärmedämm-Verbundsystems auf Wärmedämmplatten 2 beispielsweise aus Polystyrol, Mineralfasern oder Mineralschaum aufgebracht ist. Der Armierungsputz 1 weist dabei ein organisches Bindemittel auf Dispersionsbasis als Trägermatrix auf, wie es im Stand der Technik beispielsweise in Form einer organischen Armierungsmasse oder eines Armierungsputzes von der Sto AG, D-79780 Stühlingen verfügbar ist. In dieses Bindemittel 3 ist ein als Ganzes mit 4 bezeichnetes Rundkorn-Granulat eingebracht, das eine Durchmesser-Verteilung zwischen einem Minimalwert d von beispielsweise 0,5 mm und einem Maximalwert D von 2,0 mm auf weist. Zwischen den Granulatkörpern 5 mit maximalem Durchmesser sind die Granulatkörper 6, 7 mit mittlerem und kleinerem Durchmesser gleichmäßig verteilt und dienen als Stütz- und Füllkorn zwischen den großen Granulatkörpern 5. Der Volumenanteil des Rundkorn-Granulats 4 im Bindemittel 3 beträgt etwa 10%.

Die vorstehend erörterte Putzbasis 8 aus Bindemittel 3 und Rundkorn-Granulat 4 wird auf die Wärmedämmplatte 2 maschinell oder manuell mit Hilfe einer Zahnspachtel aufgetragen und gleichmäßig auf die Soll-Putzdicke P gebracht.

Anschließend wird ein Armierungsgewebe 9 in Form eines Glasfaser-Gitternetzes auf die Putzbasis 8 aufgelegt und mit Hilfe eines Reibebrettes in die Oberfläche der Putzbasis 8 eingearbeitet. Aufgrund des "Kugellager-Effektes" der großen Granulatkörper 5 kann dies leichtgängig und rationell bei Einhaltung einer gleichmäßigen Soll-Putzdicke P erfolgen. Dazu wirkt das Rundkorn-Granulat quasi als Dickenlehre. Ferner fungiert das Rundkorn-Granulat 4 als Abstandshalter, so dass das Armierungsgewebe 9 in einer definierten Einbettungstiefe T im äußeren Drittel der Soll-Putzdicke P zu liegen kommt. Dabei greifen die Zenith-Zonen 10 der Granulat-Körper 5 mit dem Durchmesser-Maximalwert D in die Maschenöffnungen 11 des Einbettungsgewebes ein, so dass das Armierungsgewebe 9 auch in seiner Erstreckungsebene gegen ein Verschieben abgestützt ist.

## Patentansprüche

1. Armierungsputz eines Wärmedämm-Verbundsystems, umfassend
- ein Bindemittel (3),
- ein in das Bindemittel (3) in einer definierten Tiefe (T) bezogen auf die Soll-Putzdicke (P) eingebettetes Armierungsgewebe (9), und
- ein im Bindemittel (3) verteiltes Leichtzuschlagkorn,
**dadurch gekennzeichnet, dass**
- das Leichtzuschlagkorn als Rundkorn-Granulat (4) bestehend aus Granulatkörpern (5, 6, 7) mit einer Durchmesser-Verteilung der Granulatkörper (5, 6, 7) zwischen einem Minimalwert (d) und einem Maximalwert (D) vorliegt, wobei der Maximalwert (D) 60 % bis 80 % der Soll-Putzdicke (P) entspricht und wobei sich das gitternetzförmige Armierungsgewebe (9) außen auf den Granulatkörpern (5, 6, 7) des Rundkorn-Granulats (4) abstützt.

2. Armierungsputz nach Anspruch 1, **dadurch gekennzeichnet, dass** die Maschenweite (M) des Armierungsgewebes (9) dem Doppelten bis Dreifachen des Durchmesser-Maximalwertes (D) der Granulatkörper (5, 6, 7) des Rundkorn-Granulates (4) entspricht.

3. Armierungsputz nach einem der vorgenannten Ansprüche, **dadurch gekennzeichnet, dass** der Durchmesser-Minimalwert (d) der Granulatkörper (5, 6, 7) des Rundkorn-Granulates (4) 0,5 mm bis 1 mm beträgt.

4. Armierungsputz nach einem der vorgenannten Ansprüche, **dadurch gekennzeichnet, dass** bei einer Soll-Putzdicke (P) von 1,5 mm der Durchmesser-Maximalwert (D) der Granulatkörper (5, 6, 7) des Rundkorn-Granulates (4) 1,0 mm beträgt.

5. Armierungsputz nach Anspruch 4, **dadurch gekennzeichnet, dass** die Maschenweite (M) des Armierungsgewebes (9) 4,0 mm beträgt.

6. Armierungsputz nach einem der Ansprüche 1 bis 3, **dadurch gekennzeichnet, dass** bei einer Soll-Putzdicke (P) von 3,0 mm der Durchmesser-Maximalwert (D) der Granulatkörper (5, 6, 7) des Rundkorn-Granulates (4) 2,0 mm beträgt.

7. Armierungsputz nach Anspruch 6, **dadurch gekennzeichnet, dass** die Maschenweite (M) des Armierungsgewebes (9) 6,0 mm beträgt.

8. Armierungsputz nach einem der vorgenannten Ansprüche, **dadurch gekennzeichnet, dass** das Rundkorn-Granulat (4) aus Blähglas-Granulat besteht.

9. Armierungsputz nach einem der vorgenannten Ansprüche, **dadurch gekennzeichnet, dass** der Volumenanteil des Rundkorn-Granulates (4) im Armierungsputz zwischen 5 % und 20 % liegt.

10. Armierungsputz nach einem der vorgenannten Ansprüche, **dadurch gekennzeichnet, dass** das Bindemittel (3) durch eine Armierungsmasse auf Basis einer Polymerdispersion gebildet ist.

11. Verfahren zum Auftragen eines Armierungsputzes (1) nach einem der vorgenannten Ansprüche auf Wärmedämmplatten (2) eines Wärmedämm-Verbundsystems,
**gekennzeichnet durch** folgende Verfahrensschritte:
- Auftragen einer aus Bindemittel (3) und Rundkorn-Granulat (4) bestehenden Putzbasis (8) auf die Wärmedämmplatte (2),
- Auflegen des gitternetzförmigen Armierungsgewebes (9) auf die Putzbasis (8), und
- Einarbeiten des Armierungsgewebes (9) in die Oberfläche der Putzbasis (8), wobei die Granulatkörper (5) des Rundkorn-Granulates (4) als Abstandshalter für das Armierungsgewebe (9) auf seiner definierten Einbettungstiefe (T) fungieren.

12. Verfahren nach Anspruch 11, **dadurch gekennzeichnet, dass** die Granulatkörper (5) mit dem Durchmesser-Maximalwert (D) des Rund-Granulats (4) mit ihren Zenit-Zonen (10) durch ein Verreiben des Armierungsgewebes (9) in die Putzbasis (8) in die Maschenöffnungen (11) des Armierungsgewebes (9) eingreifen.

## Claims

1. Reinforcing plaster of a heat insulating composite system, comprising
- a binder (3),
- a reinforcing fabric (9) embedded into the binder (3) at a defined depth (T) relative to the target plaster thickness (P), and
- a lightweight aggregate grain distributed in the binder (3),
**characterised in that**
- the lightweight aggregate grain is present as a round grain granulate (4) consisting of granulate bodies (5, 6, 7) with a diameter distribution of the granulate bodies (5, 6, 7) between a minimum value (d) and a maximum value (D), wherein the maximum value (D) corresponds to approximately 60% to 80% of the target plaster thickness (P), and wherein the lattice-shaped reinforcing fabric (9) is supported on the outside of the granulate bodies (5, 6, 7) of the round grain granulate (4).

2. Reinforcing plaster according to claim 1, **characterised in that** the mesh size (M) of the reinforcing fabric (9) is two to three times the maximum diameter value (D) of the granulate bodies (5, 6, 7) of the round grain granulate (4).

3. Reinforcing plaster according to one of the preceding claims, **characterised in that** the minimum diameter value (d) of the granulate bodies (5, 6, 7) of the round grain granulate (4) is 0.5 mm to 1 mm.

4. Reinforcing plaster according to one of the preceding claims, **characterised in that** in the case of a target plaster thickness (P) of 1.5 mm, the maximum diameter value (D) of the granulate bodies (5, 6, 7) of the round grain granulate (4) is 1.0 mm.

5. Reinforcing plaster according to claim 4, **characterised in that** the mesh size (M) of the reinforcing fabric (9) is 4.0 mm.

6. Reinforcing plaster according to one of claims 1 to 3, **characterised in that** in the case of a target plaster thickness (P) of 3.0 mm, the maximum diameter value (D) of the granulate bodies (5, 6, 7) of the round granulate (4) is 2.0 mm.

7. Reinforcing plaster according to claim 6, **characterised in that** the mesh size (M) of the reinforcing fabric (9) is 6.0 mm.

8. Reinforcing plaster according to one of the preceding claims, **characterised in that** the round grain granulate (4) consists of foam glass granulate.

9. Reinforcing plaster according to one of the preceding claims, **characterised in that** the content by volume of the round grain granulate (4) in the reinforcing plaster lies between 5% and 20%.

10. Reinforcing plaster according to one of the preceding claims, **characterised in that** the binder (3) is formed by a reinforcing material on the basis of a polymer dispersion.

11. Method of applying a reinforcing plaster (1) according to one of the preceding claims to heat insulating boards (2) of a heat insulating composite system,
**characterised by** the following method steps:
- applying a plaster base (8) consisting of a binder (3) and a round grain granulate (4) to the heat insulating board (2),
- placing the lattice-shaped reinforcing fabric (9) onto the plaster base (8), and
- working the reinforcing fabric (9) into the surface of the plaster base (8), with the granulate bodies (5) of the round grain granulate (4) acting as spacers for the reinforcing fabric (9) at its defined embedding depth (T).

12. Method according to claim 11, **characterised in that** the granulate bodies (5) with the maximum diameter value (D) of the round granulate (4) engage, with their zenith zones (10), the mesh openings (11) of the reinforcing fabric (9) by rubbing the reinforcing fabric (9) into the plaster base (8).

## Revendications

1. Crépi d'armature d'un système composite d'isolation thermique, comprenant
- un liant (3),
- un tissu d'armature (9) noyé dans le liant (3) à une profondeur (T) définie par rapport à l'épaisseur de consigne (P) du crépi, et
- un agrégat léger réparti dans le liant (3),
**caractérisé en ce que**
- l'agrégat léger se présente sous forme de granulat à grain rond (4) composé de corps de granulat (5, 6, 7), la granulométrie des corps de granulat (5, 6, 7) étant comprise entre une valeur minimale (d) et une valeur maximale (D), la valeur maximale (D) représentant de 60 % à 80 % de l'épaisseur de consigne (P) du crépi et le tissu d'armature (9) en forme de grille prenant appui extérieurement sur les corps de granulat (5, 6, 7) du granulat à grain rond (4).

2. Crépi d'armature selon la revendication 1, **caractérisé en ce que** l'ouverture de maille (M) du tissu d'armature (9) représente du double au triple de la valeur maximale (D) de diamètre des corps de granulat (5, 6, 7) du granulat à grain rond (4).

3. Crépi d'armature selon l'une des revendications précédentes, **caractérisé en ce que** la valeur minimale (d) de diamètre des corps de granulat (5, 6, 7) du granulat à grain rond (4) est de 0,5 mm à 1 mm.

4. Crépi d'armature selon l'une des revendications précédentes, **caractérisé en ce que** pour une épaisseur de consigne (P) du crépi de 1,5 mm, la valeur maximale (D) de diamètre des corps de granulat (5, 6, 7) du granulat à grain rond (4) est de 1,0 mm.

5. Crépi d'armature selon la revendication 4, **caractérisé en ce que** l'ouverture de maille (M) du tissu d'armature (9) est de 4,0 mm.

6. Crépi d'armature selon l'une des revendications 1 à 3, **caractérisé en ce que** pour une épaisseur de consigne (P) du crépi de 3,0 mm, la valeur maximale (D) de diamètre des corps de granulat (5, 6, 7) du granulat à grain rond (4) est de 2,0 mm.

7. Crépi d'armature selon la revendication 6, **caractérisé en ce que** l'ouverture de maille (M) du tissu d'armature (9) est de 6,0 mm.

8. Crépi d'armature selon l'une des revendications précédentes, **caractérisé en ce que** le granulat à grain rond (4) est un granulat de verre soufflé.

9. Crépi d'armature selon l'une des revendications précédentes, **caractérisé en ce que** la part volumique du granulat à grain rond (4) dans le crépi d'armature est comprise entre 5 % et 20 %.

10. Crépi d'armature selon l'une des revendications précédentes, **caractérisé en ce que** le liant (3) est formé par une masse d'armature sur la base d'une dispersion de polymère.

11. Procédé d'application d'un crépi d'armature (1) selon l'une des revendications précédentes sur des plaques thermo-isolantes (2) d'un système composite d'isolation thermique,
**caractérisé par** les étapes suivantes :
- application d'une base de crépi (8) composée d'un liant (3) et d'un granulat à grain rond (4) sur la plaque thermo-isolante (2),
- dépôt du tissu d'armature (9) en forme de grille sur la base de crépi (8), et
- incorporation du tissu d'armature (9) dans la surface de la base de crépi (8), les corps de granulat (5) du granulat à grain rond (4) servant d'espaceur pour le tissu d'armature (9) par rapport à sa profondeur d'incorporation (T) définie.

12. Procédé selon la revendication 11, **caractérisé en ce que** les corps de granulat (5) présentant la valeur maximale (D) de diamètre du granulat à grain rond (4) s'engagent par leurs zones zénithales (10) dans les ouvertures de maille (11) du tissu d'armature (9) par friction du tissu d'armature (9) dans la base de crépi (8).
